# EUROPEAN PATENT APPLICATION

(11) **EP 3 245 874 A1**
(43) Date of publication of application: **22.11.2017**
(21) Application number: 16737123.6
(22) Date of filing: 13.01.2016
(51) Int. Cl.: A23C 9/123, A23C 9/13, A23C 19/02, A23C 23/00

(54) **FRESH, THICK-CONSISTENCY YOGHURT CHEESE WITH LIVE BACTERIAL FLORA, CHOCOLATE-COATED YOGHURT DESSERTS MADE THEREFROM, AND METHOD FOR PRODUCING SAME**

(30) Priority: 15.01.2015 HU P1500011
(71) Applicant: Rákosi, Attila, 1154 Budapest (HU)
(72) Inventor: Rákosi, Attila, 1154 Budapest (HU)
(74) Representative: Krajnyák, András
(86) International application number: PCT/HU2016/000004
(87) International publication number: WO 2016/113580

(57) **Abstract**

The invention relates to yogurt dessert piece products (a product line) of solid consistency, made on the base of fresh yogurt cheese, coated with chocolate or cocoa-flavoured coating, with live bacterial flora, of rectangular design, the main component of which is fresh yogurt cheese with live bacterial flora, of solid consistency, obtained from milk or milk recombined from milk powder with water to a thicker consistency than milk, or milk concentrated by ultra-filtering or milk concentrated with milk powder; its curdling by a yogurt culture, occasionally its supplementary acidic treatment; the cutting of the curd, its solidification by heating, and the

## Description

### Subject of the invention:

The invention relates, on the one hand, to a fresh yogurt cheese of firm consistency with live bacterial flora, as well as chocolate- or cocoa-paste-coated yogurt dessert piece products (product line) with live bacterial flora, prepared on the base of said fresh yogurt cheese, of rectangular design, comprising as main component yogurt cheese of solid consistency with live bacterial flora obtained by curdling by a yoghurt culture of milk, or milk recombined from milk powder by water, preferably to a thicker consistency than milk, milk concentrated by ultra-filtering or milk powder, by cutting and heating the curd and separating the whey settled out.

The invention relates, on the other hand, to a method for the production of the above mentioned products by forming shape-retaining dessert corpuses from the mass of fresh yogurt cheese worked together cold with the ingredients according to the recipe, coating them with chocolate or cocoa paste, cooling and packaging them, whereas the dessert corpus may contain as a separate phase fruit jelly or other flavouring, a sponge flan or cold formable biscuit dough and, moreover, the dessert corpus may contain yogurt cheese mass of two or more colours and flavours, constituting independent phases.

### Antecedents:

Russia and several East European countries produce as acidic (sour) milk product of firm consistency by inoculating milk with a mesophilic lactic acid bacteria culture, and fresh cheese for food (quark) occasionally by supplementary curdling with rennet, and chocolate- or cocoa-paste-coated quark desserts comprising that in the amount of min. 50% (w/v). However, fresh cheese (quark) produced by this method and the quark desserts made on its base have not spread beyond the above-mentioned geographical area.

It is assumed that the more extensive global spread of quark and quark desserts is hindered by several factors:
- Quark is not known where it is not a traditional product and, therefore, people are reluctant to try quark and the products, thus quark desserts, made of it.
- Many among those who know quark and the products made of it assign low prestige value to them and consequently abstain from consuming them.
- For a part of people, the taste of quark and quark desserts is not harmonious enough, not sufficiently rich in aroma due to the use of curdling by a mesophilic lactic acid bacteria culture.

**The objective of the invention** is, therefore, to create new chocolate-coated dessert products and method(s) for producing them, where the decisive raw material of the corpus of the dessert products is a fermented sour milk product of shape-retaining solid consistency and containing live bacterial flora that has a higher nutritional value than fresh cheese used as the decisive raw material of the known chocolate-coated fresh cheese desserts, that has a more pleasant taste, a richer aroma content, a higher prestige value and, therefore, the dessert products comprising a decisive proportion of this raw material may be expected to become popular the world over.

To achieve the objective, it has been examined what sour milk products can serve as base for producing the dessert raw material featuring the desired characteristics, suitable for replacing the traditional fresh cheese (quark).

**Yogurts and yogurt desserts** are very common and popular globally due to their advantageous nutritional and organoleptic properties. Under yogurts and yogurt desserts coagulated sour milk products are meant made of milk and milk products (pasteurized milk, pasteurized partly skimmed milk, pasteurized skimmed milk, concentrated milk, concentrated partially skimmed milk, concentrated skimmed milk, pasteurized cream, pasteurized skimmed cream and their mixtures), produced by lactic curdling mainly under the effect of thermophilic micro-organisms originating from Streptococcus thermophilus and Lactobacillus delbrueckii bulgaricus cultures. The name "yoghurt" can be used rightfully if an adequate number of *n* of living entities of these two bacterial strains are present in the product.

The traditional, commonly known and most widespread method of yoghurt production: inoculating pasteurized and homogenised cow milk set at the desired fat content by a yogurt lactic acid bacteria culture, preferably the commercially available lyophilised (freeze-dried) yogurt culture, curdling it at a temperature of around 42 °C that is ideal for bacterial fermentation until the desired acidity preferably of a pH value of 4.2 to 4.8, is attained. The plain yogurt curd prepared this way is cooled to a temperature of preferably 20 °C and poured into cups or used as raw material of various flavoured yogurt desserts.

During the production of traditional yogurt desserts, various additional substances are added to the yogurt curd: at the start of the procedure, e.g. sugar or cream is added to the raw material milk and at the end of the procedure, e.g. fruit jelly or fruit pieces are mixed into the yogurt curd, it is poured into cups, closed, and stored refrigerated, or protein stabiliser additives are added to extend shelf-life, then it is pasteurized, poured into cups hot, closed and cooled down.

According to the patent specification No. E 002 213 of Compagnie Gervais Danone, Paris, e.g. sugar or sweeteners, flavours, fruit, wheat or some nutrients, e.g. vitamin, mineral and fibrous substances, may be added to the finished yogurt. In addition, various dairy raw materials, e.g. powder milk, skimmed powder milk, lactone serum, milk proteins, edible casein may also be added. The main characteristic of the solution laid down in the patent specification in question is that the yogurt is of "bimodal structure", it contains flat globules connected to the protein-fat substance network and free fat globules (the diameters of these fat globules are divided between two main values, this is why it has a "bimodal structure"), and it contains also homogenized cream of 7-14% (w/v) of the product.

Manufacturing the favoured yogurt dessert being the subject of the Hungarian patent No. 19750 A is characterised by milk being concentrated by mixing hydrocolloids into it, it is homogenized, pasteurized, cooled to a temperature of 35 °C, cultured in the known way, fermented to a pH value of 4-4.5 in 12-16 hours, another amount of hydrocolloid is added to the yogurt curdle, it is subjected to post-heat-treatment and poured into cups in a semi-aseptic way and cooled.

It is a common feature of industrially globally produced traditional yogurt products that their consistency is either free-flowing - these are the yogurt drinks -, or pulpy-flowing or spoonable and, accordingly, they are packaged for the market in bottles in the case of yogurt drinks and in cups or boxes in that of other yogurt products.

In recent years, the so-called Greek yogurts or "strained yogurts" having a higher dry matter content and therefore higher nutritional and enjoyment value than the traditional ones have enjoyed great popularity. As opposed to the maximum dry matter content of traditional yogurts of 10% (w/v), they have a dry matter content of around 20% (w/v), and the most valuable component, the protein content, may exceed e.g. in the Greek yogurt products of the company Chobani in the USA twice that of the traditional one. The known, most general method of producing Greek yogurt is to remove a part of the whey/water content by mechanical/ultra-filtering from the traditional yogurt. Greek yogurts and the yogurt desserts made on their base also belong to the yogurt products of "livery" consistency, are spoonable and packed in cups/boxes.

The "Labneh" type thick yogurts that can be considered fresh yogurt cream cheese, are widespread in the countries of the Middle East. They are made with higher dry matter-content, on an average 22-27 percentage by weight (w/v), than Greek yogurts, generally also by removing part of whey from the traditional yogurt by whey filtering. These are soft, non-shape-retaining products of spreadable consistency, usually marketed in plastic boxes. Such as e.g. the "Labneh" product of the Canadian Phoenicia Group company that contains 27% (w/v) dry matter, marketed in plastic jar.

The fermented cheese of the type "Labneh Anrabis" is usually assigned to the "Labneh" product line due to its name. This product has a shape-retaining solid consistency due to its 40% (w/v) dry matter content, but it does not belong to the group of yogurt products, as its curdling takes place not by yogurt, but by lactic bacterial culture, and its fermentation/desiccation is realized during the long, 30-35-day, process of the preparation of the product, by replacing the evaporated humidity by milk day by day, so this product cannot be classified among the fresh cheese.

An examination of the market situation makes it clear that no yogurt cheese or yogurt dessert based on it, made as a fermented product having a solid consistency and retaining its shape, is being produced/marketed.

### The invention:

**The invention is based on the realization that** fresh yogurt cheese similar to the Labneh type yogurt cream cheese, but of a firmer consistency and consequently retaining its shape will be suitable as decisive raw material of the corpus of the dessert product according to the invention, that is, it should have according to our production experiments a dry matter content of no less than 30% (w/v), preferably 33% (w/v) and a fat content not exceeding the 12% (w/v) value, similar to the corresponding values of fresh cheese (quark) applied as component of the known quark desserts.

**The invention is based also on the realization that,** fresh yogurt cheese and chocolate- or cocoa-paste-coated yogurt desserts produced by the method according to the invention are more popular due to their taste that is richer in aroma and more pleasant, due their higher nutritional value, and because the taste of yogurt is, in contrary to the taste of fresh cheese, more popular to the majority of people, they like it and associate yogurt products with higher prestige value. Consequently, they could be successful rivals to, and could even replace traditional fresh cheese and the desserts made on their base. This was confirmed by a group of consumers: of fresh yoghurt cheese according to the invention and traditional fresh cheese having identical key features (protein content, fat content, lactone content, pH value), all the test participant said that they found fresh yogurt cheese according to the invention richer in aroma and less sour than traditional fresh cheese. Degustation of desserts made on the base of traditional fresh cheese and fresh yogurt cheese according to the invention, respectively, yielded the same result: all participants found the desserts made on the base of fresh yogurt cheese according to the invention more tasty and richer in aroma than traditional desserts made on the base of traditional fresh cheese.

**The invention is based also on the realization that** test participants found also fresh yogurt cheese produced with a composition including no fat and coated yogurt desserts according to the invention made on its base more tasty than traditional fresh cheese containing 5% (w/v) fat as dry matter as well as coated quark desserts made on its base, something that could make fresh yogurt cheese according to the invention and yogurt desserts according to the invention made on its base, containing no fat of this type or much less fat than traditional fresh cheese, particularly valuable in the eyes of the consumers.

**The invention is based also on the realization that** in contrary to traditional fresh cheese, where heating applied to promote solidification and concurrently whey separation during production destroys the heat-sensitive mesophilic lactic acid bacterial culture being applied, in the method according to the invention of producing fresh yogurt cheese, the thermophilic yogurt bacterial culture being applied preserves its viability during heating for the same purpose. Consequently, the coated yogurt desserts made on the base of the received fresh yogurt cheese will be biologically active products, something that gives them a market edge over traditional fresh cheese and desserts made on its base and other food industrial products.

**The invention is based also on the realization that** where identical initial milk raw materials are applied, the product output of fresh yogurt cheese according to the invention produced by the method according to the invention does not differ essentially from the output of fresh cheese produced by mesophilic lactic acid bacterial culture according to the traditional method. However, in contrast with the method applied for producing traditional fresh cheese, the production of fresh yogurt cheese according to the invention by the method according to the invention, i.e. the production of yogurt curd of appropriate pH value and consistency, requires much less time, consequently, production tool, working time, labour and energy can be saved, that is, fresh yogurt cheese according to the invention can be produced more economically than traditional fresh cheese. Our assumption is that the reason for the faster production of yogurt curd could be the much more intensive proliferation of the bacterial culture and concurrently of the acids and aroma materials at the higher temperature, preferably 42 °C, applied for curdling yogurt by bacterial culture than the proliferation of mesophilic bacteria and the production of acids in traditional fresh cheese, preferably at a temperature of 30 °C applied there. The results of our relevant experiments have shown that inoculation of milk by lyophilised mesophilic bacterial culture or lyophilised yogurt lactic acid culture according to the standard prescribed by the manufacturer, by curdling at the above temperatures, the production of yogurt cheese of appropriate firmness according to the invention requires 40% less time on average than the production of traditional fresh cheese of similar firmness.

**The invention is based also on the realization that,** in contrary to the traditionally applied method of producing fresh cheese, the production of fresh yogurt cheese and yogurt desserts according to the invention by the method according to the invention while maintaining/improving quality is more economical due to its smaller equipment and energy needs, provided that milk recombined thicker than common milk or milk concentrated to a smaller water content is applied as raw material to be fermented, since curdling a thicker raw material by lactic acid bacterial culture does not differ essentially according to our experience from the time requirement of curdling common milk by yogurt lactic acid bacterial culture if all the other conditions are identical. This realization has been confirmed by the technological experiments we conducted and by the organoleptic comparison of the obtained products.

Fresh yogurt cheese has been manufactured by the method according to the invention:
i) from skimmed milk of 0.1 wt% fat content, 8% (w/v) fat-free dry matter content,
ii) from the dispersed mixture of skimmed milk of 0.1 wt% fat content, 8% (w/v) fat-free dry matter content and skimmed milk powder prepared so as to have 16% (w/v) fat-free dry matter content, i.e. twice as concentrated as normal skimmed milk,
iii) from the dispersed mixture of skimmed milk powder and water prepared so as to have 24% (w/v) fat-free dry matter content, i.e. thrice as concentrated as normal skimmed milk.

During testing, the participants could not distinguish by tasting the three types of fresh yogurt cheese made with normal skimmed milk and with recombined milk twice or thrice as concentrated as skimmed milk, respectively, nor the three types of coated yogurt desserts made on their respective bases, having the same characteristics in every other respect. In our opinion, the explanation for the identical or hardly distinguishable taste of fresh yogurt cheese made on the base of skimmed cow milk and twice or thrice as concentrated recombined fat-free milk, respectively, lies in that, during curdling by yogurt culture, the flavour differences of the initial (in the present example, three kinds of) raw materials are actually completely concealed/suppressed by the strong-flavoured acids and the flavouring compounds generated during curdling.

As a result of the tests carried out, following statements are considered proven:
1. There is no perceptible organoleptic difference between fresh yogurt cheese products made by the method according to the invention from skimmed milk or milk recombined from skimmed milk powder, which may be due to the fact that the components of cow milk take part in the fermentation process to the same extent and suffer the same changes in the process of curdling, as milk recombined from milk powder.
2. There is no perceptible organoleptic difference between yogurt cheese products made by the method according to the invention from the dispersed mixtures of various concentrations of water and skimmed milk or skimmed milk powder, which may be due to the fact that that the aqueous solution present in the initial dispersed mixtures of various concentrations is present in the curdling process only as the medium providing the reaction space, it does not take part in it directly, thus the differences of the relative water content of the initial mixture do not affect the curdling process perceptibly. According to our experience, the water content of even concentrated/recombined milk attaining thrice the concentration of fat-free cow milk still provides sufficient reaction space in the method according to the invention for the smooth runoff of the micro-biological and chemical processes of curdling, so the highest concentration of the initial raw material according to the invention is not conducive to a more significant increase of time required for curdling.
3. The fresh yogurt cheese products and various coated yogurt dessert piece products made on their base can be produced as sour milk products of solid consistency, rated highest by the market, of pleasant taste, high protein and low fat content by the method according to the invention.

**The invention is based also on the realization** that whey of a smaller quantity, yet more concentrated than normal whey is produced as by-product from recombined milk that is several times more concentrated than normal milk during the production of fresh yogurt cheese by the method according to the invention, as a result of which it can be handled/processed by smaller devices and at lower energy consumption, and a food industrial product of higher nutritional value can be produced out of it than by the known processes and materials.

**The objective of the invention is realized** by applying, based on the above realizations, as decisive raw material of the corpus of the chocolate-coated desserts according to the invention and concurrently as the main components of the desserts the fresh yogurt cheese according to the invention, and thus the product according to the invention, the coated yoghurt piece dessert with live bacterial flora, comprises with reference to the finished product:
- fresh yogurt cheese of solid consistency with live bacterial flora, of further 30-35% (w/v) dry matter content in excess of 50% (w/v), obtained by pasteurizing the dispersed mixture of milk or skimmed milk or milk/skimmed milk concentrated by ultra-filtering, prepared with water or skimmed milk and skimmed milk powder so as to have 8-24% (w/v) fat-free dry matter content, set at 0-5% (w/v) fat content with butter, cream or solid vegetable fat containing no trans fats, by curdling preferably by lyophilised thermophilic lactic acid bacterial culture comprising Streptococcus thermophilus and Lactobacillus delbrueckii bulgaricus thermophilic bacterial strains, by potential supplementary fermentation by inoculation, curd solidification by heating, by removing the unnecessary part of the resulting whey,
- 8-15% (w/v) sugar or other sweetener replacing that partly/wholly,
- 0-15% (w/v) butter and/or solid vegetable fat containing no trans fats, preferably margarine containing omega-3 fatty acid,
- 0-5.0% (w/v) skimmed milk powder,
- 0-15% (w/v) jam, fruit jelly or other flavouring, mixed in the corpus material of the dessert or constituting a separate phase in the corpus,
- 0-0.1% (w/v) lemon or vanilla aroma,
- 1-2.0% (w/v) viscosity-enhancing, whey-separation-reducing auxiliary material of antimicrobial and anti-oxidant content, preferably of the PROMIKOLL type,
- food colorant, in the amount corresponding to the standardised quantity, if we desire to colour the material of the corpus.

Said materials, mixed into a homogenous mass, constitute the corpus of the dessert; and in addition, the product comprises in form of an evenly applied coating on the corpus, with reference to the finished product:
- a chocolate or cocoa coating paste of 20-35% (w/v).

The product is moulded into a bar, cubic or spherical shape of round, square, rectangular other cross-section and wrapped into foil with or without applying protective gas.

In addition to the above components, the dessert may also contain approved preservatives.

**A possible method according to the invention** for making the fresh yogurt cheese constituting the main component of the desserts according to the invention is the following: milk is pasteurized at a temperature of 90-95 °C, in the meantime, its fat content is set preferably at the value of 0.1-1.5% (w/v), it is homogenised at high pressure, cooled to a temperature of 40-45 °C, preferably 42 °C and poured into a cheese tank/cheese vat where it is inoculated by the amount of commercially available lyophilised yogurt bacterial culture corresponding to the standardised quantity, it is fermented at this temperature until reaching the pH value of 4.6-4.4, the curd being obtained is cut into cubes with edges of 1-2 cm length, the mixture is heated to a maximum temperature of 55 °C to solidify the protein network and enhance whey separation (syneresis) until reaching the appropriate thickness of the curd while sparing its live flora, whey is separated from the yogurt curd, unnecessary whey is pressed from the curd until the desired, preferably 33% (w/v), dry matter content is attained and thus a fresh yogurt cheese of solid consistency, with live bacterial flora, is obtained.

Used directly, as foodstuff, the fresh yogurt cheese obtained this way can replace traditional fresh cheese, and the yogurt dessert piece products according to the invention are made from the shape-retaining mass of the yogurt cheese homogenised with the components according to the various recipes, cooled preferably to a temperature of 4 °C, by moulding the dessert corpuses preferably by a multiline moulding machine of regulated pressure, preferably of the type known under the name "BUDAGÉP", coating them with chocolate or cocoa coating paste, by cooling and packaging them.

**As another implementation of the method according to the invention,** for producing a version richest in protein of a fresh yogurt cheese constituting also the main component of the desserts, based on the realizations described above, a raw material that is much more concentrated than milk is used: from skimmed milk concentrated by ultra-filtering, or from the dispersed mixture of skimmed milk concentrated with milk powder, or of skimmed milk powder prepared with water so as to be much more concentrated than milk, said mixtures having preferably 16-24% (w/v) fat-free dry matter content.

The method typically comprises following steps:
a) the quantity of skimmed milk powder required for attaining preferably 16-24% (w/v) dry matter content is introduced into water/skimmed milk heated to a temperature of 50 °C preferably by a disperser device preferably of the type known under the name "BUDAGÉP"; that will be exposed in 2-3 hours while the mixture is being stirred continuously,
b) after exposition, the mixture is pasteurized at a temperature of 90-95 °C (given the absence of fat, no high-pressure homogenisation is necessary), cooled to a temperature of 40-45 °C and transferred to a cheese tank/cheese vat,
c) the mixture is inoculated by the amount of lyophilised thermophilic yogurt lactic acid bacterial culture corresponding to the standardised quantity, it is fermented preferably at 42 °C temperature until a pH value of 4.6-4.4 is attained, the received curd is cut into to cubes of 1-2 cm edge length, the mixture is heated to a maximum temperature of 55 °C to spare its live flora in order to solidify the protein network and enhance whey separation until appropriate curd firmness is attained,
d) the curd-whey mixture is drained from the cheese tank/cheese vat, a major part of whey is separated by straining, the unnecessary amount of whey is pressed from the curd until the desired, preferably 33% (w/v), dry matter content is attained, as a result of which fresh yogurt cheese of solid consistency, with live bacterial flora is obtained.

The yogurt dessert piece products according to the invention are made of the fresh yogurt cheese mass homogenised with the components according to the various recipes, cooled to a temperature of 4°C, by moulding the dessert corpuses preferably by a multiline moulding machine of regulated pressure, preferably of the BUDAGÉP type, by coating with chocolate or cocoa coating mass, cooling and packaging and they are stored at a temperature of 4 °C until delivery.

**As another implementation of the method according to the invention,** the fat-containing version of the fresh yogurt cheese constituting also the main component of the corpus of the desserts according to the invention is produced in the same way as the fat-free version described above, with the difference that, from among the above-described steps of the method:
- in Step a) the quantity of butter, cream or solid vegetable fat containing no trans fat necessary for setting the mixture expediently at max. 5% (w/v) fat content is also added as a further component of the mixture, and
- in Step b), the mixture is homogenised by high-pressure homogeniser to finely disperse the fat globules added to the mixture.

**As another implementation of the method according to the invention,** the time and device requirements of the production of fresh yogurt cheese constituting also the main component of the desserts according to the invention can be reduced significantly by applying the steps described in the previous methods with the difference that in Step c), simultaneously with inoculation by yoghurt culture, E 575 glucono-delta-lactone is added to the mixture (this is a substance present in significant quantities in fruit, wine, honey), in a quantity, depending on the protein content of the mixture, that effects the separation and neutralisation of a significant part of OH radicals connected to the shell of milk proteins by producing organic acid in the mixture by hydrolysis, exempting the yogurt bacteria from executing that task thus, on the one hand, the acids produced by the latter can be utilised fully in the aroma development of the product and, on the other, the alteration of the pH value of the product starts earlier and, consequently, the time required for fermentation is shortened. This method of production of fresh yogurt cheese necessary for the production of the yogurt desserts according to the invention is applied preferably in those cases where fresh yogurt cheese production represents a bottleneck in production capacity.

The yogurt dessert piece products according to the invention are made of the fresh yogurt cheese mass homogenised with the components according to the various recipes, cooled to a temperature of 4°C, by moulding the dessert corpuses preferably by a multiline moulding machine of regulated pressure, preferably of the BUDAGÉP type, by coating with chocolate or cocoa coating mass, cooling and packaging and they are stored at a temperature of 4 °C until delivery.

Fresh yogurt cheese types according to the invention produced by the above-listed methods are particularly suitable also for replacing traditional fresh cheese (quark) for food produced by traditional mesophilic lactic acid bacterial fermentation in production and market distribution as nutritionally more valuable products of more pleasant taste and higher prestige that can be produced economically by shortening production time.

The methods according to the invention for producing yogurt cheese and yogurt desserts will be illustrated by the following examples, without limiting either the applicability of the invention or the scope of the patent applied for to those:

### Example 1

### Method for the production of fresh yogurt cheese with live bacterial flora from milk

Cow milk is pasteurized by a plate pasteurizer device at 95 °C, so that, in the meantime, the fat content of milk is set to 1.5% (w/v) by the skimming machine, it is homogenised by homogeniser, pumped into a heatable/coolable cheese tank/cheese vat provided with mixer at a temperature of 42 °C, inoculated by the amount of yogurt bacterial culture of type YC-380 corresponding to the standardised quantity and curdled at this temperature, until the pH value of 4.6-4.4 is attained. The mixer of the tank/vat is replaced by a stringed cutting tool and the curd is cut into cubes of 1-2 cm edge length, the mixture is heated while being gently stirred until the adequate firmness of the curd is attained, taking care that its temperature should not exceed 55 °C in order to preserve the live flora. After the intensity of whey separation had decreased, the bigger part of whey is removed from the tank/vat through a straining basket. The curd/whey mixture remaining in the tank/vat is drained preferably into a cart with perforated bottom preferably of the BUDAGÉP type, and the unnecessary whey is removed from the curd by using the pneumatic press structure of the cart, preferably until reaching 30-35% (w/v) dry matter content in the curd.

With that the solid fresh yogurt cheese with live bacterial flora is made, it is cooled preferably to a temperature of 4 °C and stored refrigerated until use.

### Example 2

### Method for the production of fat-free fresh yogurt cheese with live bacterial flora from the mixture of skimmed milk powder and water prepared so as to have 24% (w/v) fat-free dry matter content

Water of a temperature of 50 °C is poured into a preparatory tank provided with mixer. With the help of a disperser device comprising a powder mixing tank and a shear-cutter pump connected to it by circulation pipeline, preferably of the BUDAGÉP type, the quantity of skimmed milk powder required for attaining 24% (w/v) dry matter content is added to the water in the preparatory tank, and the mixture is dispersed with constant circulation for two hours by the disperser device. During this time, the milk powder is fully exposed. The dispersed mixture prepared this way, that is actually recombined fat-free milk that is thrice as concentrated as normal skimmed milk, is pasteurized by a plate pasteurizer device at a temperature of 90÷95 °C, and pumped over at a temperature of 42 °C into a heatable/coolable cheese preparation tank facilitating crud separation, designed with conical bottom, preferably of the BUDAGÉP type, it is inoculated by the amount of yogurt bacterial culture of type YC-380 corresponding to the standardised quantity and it is curdled at this temperature until the pH value of 4.6-4.4 is attained. The received curd is cut into cubes of 1-2 cm edge length by a stringed cutter device, the mixture is heated while being gently stirred until the adequate firmness of the curd is attained, taking care that its temperature should not exceed 55 °C in order to preserve the live flora. After the intensity of whey separation had decreased, the curd/whey mixture is drained into a cart with perforated bottom, preferably of the BUDAGÉP type, and the unnecessary whey is removed from the curd by using the pneumatic press structure of the cart, preferably until reaching 30-35% (w/v) dry matter content in the curd.

With that a fat-free solid fresh yogurt cheese with live bacterial flora, richest in proteins, is made, that is preferably cooled to a temperature of 4 °C and stored refrigerated until use.

### Example 3

### Method for the production of fresh yogurt cheese with live bacterial flora containing fat from the mixture of milk powder and water prepared so as to have 16% fat-free dry matter content

Water of a temperature of 50 °C is poured into a preparatory tank provided with mixer. With the help of a disperser device comprising a powder mixing tank and a shear-cutter pump connected to it by circulation pipeline, preferably of the BUDAGÉP type, the quantity of skimmed milk powder required for attaining 16% (w/v) dry matter content is added to the water in the preparatory tank as well as preferably the quantity of butter or solid vegetable fat required to have 3% (w/v) fat content, and the mixture is dispersed with constant circulation for two hours.

The dispersed mixture prepared this way, that is actually recombined fat-free milk that is twice as concentrated as milk of 1.5% (w/v) fat content, is pasteurized by plate pasteurizer device at a temperature of 90÷95 °C, homogenised by high-pressure homogeniser device and pumped over at a temperature of 42 °C into a heatable/coolable cheese preparation tank facilitating crud separation, designed with conical bottom, preferably of the BUDAGÉP type, it is inoculated by the amount of yogurt bacterial culture of type YC-380 corresponding to the standardised quantity and it is curdled at this temperature until the pH value of 4.6-4.4 is attained. The received curd is cut into cubes of 1-2 cm edge length by a stringed cutter device, the mixture is heated while being gently stirred until the adequate firmness of the curd is attained, taking care that its temperature should not exceed 55 °C in order to preserve the live flora. After the intensity of whey separation had decreased, the curd/whey mixture is drained into a cart with perforated bottom, preferably of the BUDAGÉP type, and the unnecessary whey is removed from the curd by using the pneumatic press structure of the cart, preferably until reaching 30-35% (w/v) dry matter content in the curd.

With that a solid fresh yogurt cheese with live bacterial flora required for making the material of the corpus of yogurt desserts according to the invention, of optimum composition, containing fat, is made, that is preferably cooled to a temperature of 4 °C and stored refrigerated until use.

### Example 4

### Method for the production of a plain chocolate-coated yogurt dessert bar piece product with live bacterial flora

Fresh yogurt cheese with live bacterial flora is produced by the method described in Examples 1, 2 or 3 above, preferably of 33% (w/v) dry matter content, cooled to a temperature of 4 °C and worked together with the ingredients measured out according to the following recipe by a mixer-homogeniser preferably of the BUDAGÉP type into a quasi-homogenous white plain yogurt cheese:
- 74 kg fresh yogurt cheese,
- 10 kg butter (80% fat content),
- 16 kg maple syrup,
- 100 g lemon powder aroma of type AB 352,
- 2 kg additives of type PROMIKOLL.

The mass thus obtained, that serves as raw material of the dessert corpus, is cooled to a temperature of 4 °C, moulded into bars of a diameter of 18 mm and a length of 50-80 mm by a multi-line moulding machine of regulated pressure, preferably of the BUDAGÉP type, the entire surface of the corpuses is coated by the amount of chocolate corresponding to 30% (w/v) with reference to the finished dessert product in a dipping machine. The desserts made this way are gently cooled to a temperature of 10 °C in a cooling tunnel, then wrapped, preferably one by one by a "flow-pack" packaging machine provided with automatic feeding unit, with or without applying protective gas, preferably of the BUDAGÉP LINEPACK type, into BOPP foil prepared by printing, packed into multipack boxes and stored refrigerated at a temperature of 4°C until delivery.

### Example 5

### Method for making chocolate-coated, flavoured yogurt dessert bar piece products with live bacterial flora

Dessert product is made by the method as described in Example 4, with the difference that the material of the dessert corpus is a coloured, flavoured yogurt cheese mass, made according to the following recipe:
- 72 kg fresh yogurt cheese,
- 10 kg vegetable fat (70% fat content),
- 12 kg beet sugar,
- 4 kg fruit jelly (sour cherry, currant apricot, strawberry, banana or other) with adequate colourant content,
- 100 g vanilla powder aroma of type AB-678,
- 2 kg additives of type PROMIKOLL.

### Example 6

### Method for making cocoa-paste-coated, flavoured yogurt dessert bar piece product with live bacterial flora

Dessert product is made by the method as described in Example 5, with the difference that the corpuses are coated by cocoa paste.

### Example 7

### Method for making cocoa-paste-coated, filled yogurt dessert bar piece product with live bacterial flora

Fresh yogurt cheese with live bacterial flora is produced by the method as described in Examples 1, 2 or 3, preferably with dry matter content of 33% (w/v), cooled to a temperature of 4 °C and worked together to a quasi-homogeneous plain yogurt cheese mass preferably in a mixer-homogeniser preferably of the BUDAGÉP type with the materials weighted out according to the following recipe:
- 76 kg fresh yogurt cheese,
- 13 kg margarine of omega-3 fat content (50% fat content),
- 9 kg cane sugar,
- 100 g lemon powder aroma, brand AB 352,
- 2 kg additives of type PROMIKOLL FC-10 ABS 02.

The mass thus obtained, that is to serve as raw material of the dessert corpus, is cooled to a temperature of 4 °C, moulded into bars of a diameter of 18 mm and a length of 50-80 mm by a multi-line moulding machine with pressure control preferably of the BUDAGÉP type, so that through the injector tubes located in the axis line of the corpus-shaping pressure pipes of the moulding machine bars of jam, fruit pulp, caramel, sweetened chestnut purée, nut or other located in the axis line of the dessert corpuses are made in a quantity of 4% (w/v) with reference to the finished dessert product. The entire surface of the corpuses is coated in the dipping machine with cocoa paste of 30% (w/v) with reference to the finished dessert product. The desserts made this way are cooled to a temperature of 6°C in a cooling tunnel, then wrapped, preferably one by one or two by two by a "flow-pack" packaging machine provided with automatic feeding unit, with or without applying protective gas, preferably of the BUDAGÉP LINEPACK type, into BOPP foil prepared by printing, packed into multipack boxes and stored refrigerated at a temperature of 4 °C until delivery.

### Example 8

### Method for making chocolate-coated, two-colour, flavoured yogurt dessert bar piece product with live bacterial flora

Dessert product is made by the method as described in Examples 4 or 5, with the difference that the white, plain yogurt cheese corpus raw material and the coloured, flavoured yogurt cheese corpus raw material are made by separate procedures is made by a separate procedure according to the recipes described under Example 4and Example 5, respectively.

Of the two types of yogurt cheese thus obtained, dessert corpuses of a diameter of 18 mm and a length of 50-80 mm are moulded by special moulding pipes of a twin-structured multiline moulding machine with dual pressure area, preferably of the BUDAGÉP type, in which the plain and flavoured corpus raw materials made by separate methods according to two recipes constitute two independent phases, preferably so that the independent phases have identical cross-sectional shapes and dimensions.

### Example 9

### Method for making a cocoa-paste-coated, layered white yogurt dessert bar with live bacterial flora, named "Attila"

A dessert product is produced by the method as described in Example 7, with the difference that cuboids (bars) of a width of 35 mm, a height of 18 mm and a length of 80 mm are moulded of the white, plain yogurt cheese mass serving as raw material for the dessert corpus by a multiline moulding machine preferably of the BUDAGÉP type so that, through the injector pipes with flat outlet located along the longitudinal axis of the cross-section of the corpus-moulding pressure pipes of the moulding machine, jam, fruit pulp, sweetened chestnut purée, nut or other cream product is introduced from one edge of the corpus to the opposite edge as a layer of a thickness of 2 mm, constituting a separate phase in the dessert corpus, and the surface of the dessert corpuses is coated by the amount of cocoa paste corresponding to 20% (w/v) of the finished dessert product.

### Example 10

### Method for making a chocolate-coated coloured yogurt dessert bar with live bacteria, named "Attila"

Dessert product is made by the method as described in Example 9, with the difference that the material of the dessert corpus is a coloured, flavoured yogurt cheese mass, made according to the recipe described under Example 5, and the surface of the dessert corpus is coated by the amount of chocolate corresponding to 20% (w/v) of the finished product.

### Example 11

### Method for making a cocoa-paste-coated, filled yogurt dessert piece product with live bacterial flora, named "Eckler"

Fresh yogurt cheese with live bacterial flora is made by the method as described in Examples 1, 2 or 3, preferably with 33% (w/v) dry matter content, cooled to a temperature of 4°C and worked into a quasi-homogeneous, white, plain yogurt cheese mass by a mixer-homogeniser preferably of the BUDAGÉP type with the materials measured out according to the following recipe:
- 74 kg fresh yogurt cheese,
- 10 kg butter (80% fat content),
- 14 kg beet sugar,
- 100 g lemon powder aroma of type AB 352,
- 2 kg additives of type PROMIKOLL.

Aromatised/flavoured biscuit dough is made by a separate procedure from ground biscuits, butter and/or vegetable fat, sugar and/or sweetener, rum or other aroma and occasionally fruit pulp kneaded cold into a homogenous extrudable mixture.

Dessert corpuses of a diameter of 25 mm and a length of 50-80 mm are moulded of the white yogurt cheese mass and the biscuit dough by the special moulding pipes of a twin-structured multiline moulding machine with dual pressure space, preferably of the BUDAGÉP type, so that the tube-like external part of the corpuses is made of biscuit dough, preferably of 5 mm wall thickness, and the inner part of the corpuses is made of white yogurt cheese mass as a separate phase. The corpuses are coated by the amount of cocoa coating composition corresponding to 20% (w/v) of the finished dessert product, and the desserts are cooled to a temperature of 6°C in a cooling tunnel then wrapped one by one or two by two by a "flow pack" packaging machine preferably of the BUDAGÉP LINEPACK type, provided with automatic feeder, with or without applying protective gas, into BOPP foil prepared by printing, then put into multipack boxes and stored refrigerated at a temperature of 4 °C until delivery.

### Example 12

### Method for making cocoa-paste-coated yogurt bar product with sponge cake, with live bacterial flora

Fresh yogurt cheese with live bacterial flora is made by the method as described in Examples 1, 2 or 3, preferably with 33% (w/v) dry matter content, cooled to a temperature of 4 °C then worked into a quasi-homogenous white, plain yogurt cheese mass by a mixer-homogeniser preferably of the BUDAGÉP type with the materials weighted out according to the following recipe:
- 74 kg fresh yogurt cheese,
- 10 kg butter (80% fat content),
- 14 kg beet sugar,
- 100 g lemon powder aroma of type AB 352,
- 2 kg additives of type PROMIKOLL.

Sponge cake strips of a width of 35 mm and a thickness of 4 mm are made by a separate procedure, and the white, plain or coloured, flavoured yogurt cheese mass made by a separate procedure is applied on the entire width of the sponge cake strips, as a layer of a height of 12 mm, by continuous feed, by a multiline moulding machine preferably of the BUDAGÉP type, the continuous cuboid being formed is cut to pieces of a length of 80 mm, said finished pieces constituting the corpus of the dessert. The entire surface of the corpuses is covered by applying the amount of cocoa coating corresponding to 20% (w/v) of the finished product in a dipping machine, and the desserts prepared this way are cooled to a temperature of 6 °C in a cooling tunnel, then wrapped one by one or two by two by a "flow pack" packaging machine preferably of the BUDAGÉP LINEPACK type, provided with automatic feeder, with or without applying protective gas, into BOPP foil prepared by printing, then put into multipack boxes and stored refrigerated at a temperature of 4 °C until delivery.

## Claims

1. A yogurt dessert piece product, of solid consistency, coated by chocolate or cocoa paste, with live bacterial flora, **characterised in that** it contains, with reference to the finished product:
- milk product as a main component: fresh yogurt cheese with bacterial flora, of solid consistency, of 30-35% (w/v) dry matter content, obtained by pasteurisation of the dispersed mixture of milk or skimmed milk, or milk or skimmed milk concentrated by ultra-straining, preferably with water or skimmed milk powder, to 8-24% (w/v) fat-free dry matter content, set at 0-5% (w/v) fat content with butter, cream or solid vegetable fat containing no trans fats, its acidic curdling by a preferably lyophilised, thermophilic yogurt bacteria culture including Streptococcus thermophilus and Lactobacillus delbrueckii bulgaricus bacterial strains and its occasional supplementary inoculating fermentation, curd solidification by heating and the removal of the unnecessary part of the whey being created,
- 0-15% (w/v) butter and/or solid vegetable fat containing no trans fats, preferably containing omega-3 fatty acids,
0-5,0% (w/v) milk powder,
- 8-15% (w/v) sugar or other sweetener replacing that partly/wholly,
- 0-20% (w/v) jam, fruit jelly or other flavour material, mixed in the dessert corpus material or constituting a separate phase in the corpus,
- 0-0.1% (w/v) lemon or vanilla aroma,
- 1.0-2.0% (w/v) viscosity-enhancing, whey-separation-reducing auxiliary material of antimicrobial and anti-oxidant content, preferably of the PROMIKOLL type,
- food industrial colourant in an amount corresponding to the standardised quantity, if the dessert corpus material is to be coloured,
- potentially: approved preservative(s),
the above listed materials, after being mixed into a homogenous mass, constitute the corpus of the dessert and, in addition, the product furthermore comprises, in form of an evenly applied coating on the corpus, with reference to the finished product:
- a chocolate or cocoa coating paste of 20-35% (w/v),
the product is moulded into a bar, cubic or spherical shape of round, square, rectangular or other cross-section and wrapped preferably one by one, with or without introducing protective gas, into a foil.

2. The yogurt dessert piece product according to claim 1 **characterised in that** the dessert corpus contains as separate phase:
0-30% (w/v) sponge flan, fondant material or biscuit dough made by the known method.

3. Method for producing the yogurt dessert according to claim 1 or 2, **characterised in that** milk/skimmed milk or milk/skimmed concentrated to 8-24% (w/v) fat-free dry matter content is applied for producing the main milk product component of the dessert, its fat content is set at the value of 0-5% (w/v) with butter, cream or vegetable fat containing no trans fats, it is pasteurized at a temperature of 90-95 °C, homogenised, cooled, curdled with thermophilic yogurt bacterial culture preferably at a temperature of 42 °C until reaching a pH value of 4.6-4.4, the curd is cut into cubes of 1.0-2.0 cm edge length, solidified by heating to a maximum temperature of 55 °C, then whey is separated from the curd, fresh yogurt cheese is obtained by pressing the unnecessary whey from the curd that is then cooled to a maximum temperature of 4-6 °C, then worked into a homogenous mass with the materials according to the recipe: sugar, butter and/or solid vegetable fat, preferably margarine containing omega-3 fatty acids, flavours, preferably fruit jelly, aroma, improver and preservative additives, preferably of the PROMIKOLL type, the mass obtained is moulded into a bar, cube or spherical shape of square, cube, rectangular or other cross-section by extrusion, preferably by a multiline moulding machine of the BUDAGÉP type, coated over its entire surface by chocolate or cocoa-flavoured icing on a coating machine, cooled in a cooling tunnel, and wrapped with or without introducing protective gas, into foil by a "flow pack" packaging machine with automatic feed, preferably of a BUDAGÉP LINEPACK type.

4. The method according to claim 3, **characterised in that,** as initial material for the production of the main milk product component of the dessert, the dispersed mixture of milk and milk powder, preferably water and skimmed milk powder made with 8-24% (w/v) fat-free dry matter content concentration and set at 0-5% (w/v) fat content with butter, cream or solid vegetable fat containing no trans fats is applied, and prior to pasteurisation, milk powder in the mixture is exposed at its temperature of around 50 °C over 2-3 hours.

5. The method according to any of claims 3-4, **characterised in that** to accelerate curdling and to reduce thereby the time requirement of production, the size/quantity of devices being applied and of their energy requirements, simultaneously with the introduction of the yogurt culture, the amount of E575 glucono-delta-lactone corresponding to one quarter-half of the mass of milk protein is added to the milk/dispersed mixture.

6. The method according to any of claims 3-5, **characterised in that** during the moulding of the dessert corpus, flavouring material, preferably fruit jelly, constituting a separate phase, and/or cold-mouldable biscuit dough prepared by the known separate procedure is introduced into the corpus by continuous injection.

7. The method according to any of claims 3-6, **characterised in that** the dessert corpus is moulded of the homogeneous mass of fresh yogurt cheese and other ingredients constituting two or more separate phases, of diverse flavour and colouring, according to the recipe.
